(19) Europäisches Patentamt / European Patent Office / Office européen des brevets

(11) **EP 4 375 832 A1**

(12) **DEMANDE DE BREVET EUROPEEN**

(43) Date de publication:
**29.05.2024   Bulletin 2024/22**

(21) Numéro de dépôt: **23212190.5**

(22) Date de dépôt: **27.11.2023**

(51) Classification Internationale des Brevets (IPC):
**G06F 7/58** *(2006.01)*        **G09C 1/00** *(2006.01)*
**H04L 9/08** *(2006.01)*

(52) Classification Coopérative des Brevets (CPC):
**G09C 1/00; G06F 7/588; H04L 9/0866;**
H04L 2209/26

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **28.11.2022   FR 2212412**

(71) Demandeur: **Commissariat à l'énergie atomique et aux énergies alternatives**
**75015 Paris (FR)**

(72) Inventeurs:
• **PEBAY-PEYROULA, Florian**
  **38054 GRENOBLE CEDEX 9 (FR)**
• **CAGLI, Carlo**
  **38054 GRENOBLE CEDEX 9 (FR)**
• **FAURIAT, Mattieu**
  **38054 GRENOBLE CEDEX 9 FRANCE (FR)**

(74) Mandataire: **Lavoix**
**2, place d'Estienne d'Orves**
**75441 Paris Cedex 09 (FR)**

(54) **PROCÉDÉ DE FOURNITURE D'UN ALÉA POUR UN ALGORITHME CRYPTOGRAPHIQUE, PROCÉDÉ DE TRAITEMENT D'UNE DONNÉE ET PROGRAMME D ORDINATEUR ASSOCIÉS**

(57)   Ce procédé de fourniture d'un aléa pour un algorithme cryptographique est mis en oeuvre par un calculateur électronique comprenant un coeur et un ensemble de mémoire(s), l'ensemble de mémoire(s) comportant une mémoire de référence présentant un caractère aléatoire intrinsèque dans un état prédéfini de génération d'aléa.

Le procédé comprend :
- lecture d'un message de référence dans une première zone mémoire, la première zone mémoire étant incluse dans la mémoire de référence, l'étape de lecture étant effectuée à l'état de génération d'aléa de la mémoire de référence ;
- écriture du message de référence dans une deuxième zone mémoire, distincte de la première zone mémoire, la deuxième zone mémoire étant incluse dans l'ensemble de mémoire(s) ;
- lecture ultérieure du message de référence dans la deuxième zone mémoire, le message de référence lu dans la deuxième zone mémoire formant l'aléa pour l'algorithme cryptographique.

FIG.2

EP 4 375 832 A1

**Description**

La présente invention concerne un procédé de fourniture d'un aléa pour un algorithme cryptographique, le procédé étant mis en oeuvre par un calculateur électronique.

L'invention concerne aussi un procédé de traitement d'une donnée via un algorithme cryptographique utilisant un aléa, le procédé étant mis en oeuvre par un calculateur électronique, et l'aléa étant fourni par un tel procédé de fourniture.

L'invention concerne également un programme d'ordinateur comportant des instructions qui, lorsqu'elles sont exécutées par un calculateur, mettent en oeuvre un tel procédé de fourniture ou un tel procédé de traitement.

Les fonctions physiques non-clonables, également appelées PUF (de l'anglais *Physical Unclonable Function*), exploitent un comportement aléatoire intrinsèque d'un composant électronique pour fournir un aléa pour un algorithme cryptographique, telle qu'une primitive d'authentification ou de génération de clé. Le comportement aléatoire recherché est dit « statique », car - pour un composant donné - il doit être stable dans le temps. Par exemple, la clé générée dans le composant doit être toujours la même, car si elle sert au chiffrement de la mémoire, au fil du temps le contenu ne serait plus déchiffrable si la clé générée variait.

Cette notion de fiabilité (ou robustesse) est importante, et est un problème que doivent résoudre les fabricants de fonctions physiques non-clonables. Par exemple, pour les fonctions physiques non-clonables réalisées à base de mémoire vive statique, également appelées SRAM-PUF (de l'anglais *Static Random Access Memory - PUF*), qui exploitent les dispersions technologiques s'exprimant par un biais à l'allumage, ont recours à une redondance supérieure à un facteur 10 et à l'utilisation d'algorithmes correcteurs d'erreurs pour pallier à ce problème de fiabilité.

Le document US 10,572,190 B2 concerne un appareil fournissant un code PUF, cet appareil comprenant une paire de cellules de mémoire non-volatile et un circuit de détection de données. Le circuit de détection est couplé à la paire de cellules de mémoire non-volatile, lit deux états initiaux de la paire de cellules de mémoire non-volatile et génère un code PUF en comparant les deux états initiaux de la paire de cellules de mémoire non-volatile. Si l'une des cellules mémoire de la paire est trouvée à une résistance inférieure à l'autre des cellules mémoire de la paire, une impulsion d'écriture sera effectuée sur la première cellule, afin d'en réduire ultérieurement la résistance. De ce fait, la différence de résistance entre les deux cellules sera élargie. Ce mécanisme permet de rendre plus stable la fourniture du code PUF, mais nécessite l'utilisation de deux cellules mémoire pour chaque bit d'aléa à lire.

Le document US 11,081,172 B1 décrit un procédé pour former une clé de sécurité sur puce. Le procédé comprend la connexion électrique en série d'une paire d'éléments de mémoire à changement de phase, également appelée éléments PCM (de l'anglais *Phase Change Memory*), la connexion électrique d'un transistor de programmation à la paire d'éléments PCM, la connexion électrique d'une entrée d'un inverseur à un noeud commun de la paire d'éléments PCM, le réglage des éléments PCM à un état de faible résistance, dit LRS (de l'anglais *Low Resistance State*) dans une étape d'initialisation, l'application d'une impulsion de réinitialisation pour générer un bit de sécurité et faire passer l'un des éléments PCM à un état de haute résistance, dit HRS (de l'anglais *High Resistance State*), et la génération d'un "1" ou d'un "0" logique à la sortie de l'inverseur. Dans ce document, un premier élément PCM de la paire est alors initialement dans un état LRS et est ensuite reprogrammé en état HRS. En fonction de sa résistance finale, par rapport au deuxième élément PCM de la paire, l'inverseur sortira une valeur aléatoire. Ce système utilise alors la variation de la résistance dans l'état HRS, intrinsèque à la technologie PCM, pour obtenir la valeur aléatoire, et nécessite également l'utilisation de deux éléments PCM à cette fin.

Le document US 2014/0140502 A1 concerne un dispositif ayant une fonction physique non-clonable (PUF), le dispositif comprenant un circuit intégré et une mémoire PCM, incorporée dans le circuit intégré et comportant une pluralité de cellules, où la mémoire PCM est réglée d'une manière qui crée une variation de phase sur la pluralité de cellules, et où la variation de phase comprend la fonction physique non-clonable. Ainsi ce document décrit une façon de programmer les cellules PCM de manière à rendre la résistance programmée la plus aléatoire possible. Ceci est fait en choisissant des conditions de programmation faible, qui ne permettent pas une programmation complète de la mémoire.

Le document *"Design and security évaluation of PCM-based rPUF using cyclic refreshing strategy"* de Qi Zhang et al (2018) propose un schéma différentiel de PUF reconfigurable (rPUF) avec une mémoire PCM, où l'aléa est extrait des variations de la résistance programmée d'un cycle d'écriture/effacement à l'autre.

Toutefois, de tels procédés de de fourniture d'un aléa pour un algorithme cryptographique ne sont pas optimaux.

Le but de l'invention est alors de proposer un procédé permettant de fournir plus efficacement un aléa pour un algorithme cryptographique.

A cet effet, l'invention a pour objet un procédé de fourniture d'un aléa pour un algorithme cryptographique, le procédé étant mis en oeuvre par un calculateur électronique comprenant un coeur et un ensemble de mémoire(s), l'ensemble de mémoire(s) comportant une mémoire de référence présentant un caractère aléatoire intrinsèque dans un état prédéfini de génération d'aléa, le procédé comprenant une phase d'initialisation d'une fonction physique non-clonable et une phase d'utilisation de la fonction physique non-clonable ;

la phase d'initialisation comprenant les étapes suivantes :

- lecture d'un message de référence dans une première zone mémoire, la première zone mémoire étant incluse dans la mémoire de référence, l'étape de lecture étant effectuée à l'état de génération d'aléa de la mémoire de référence ;
- écriture du message de référence dans une deuxième zone mémoire, distincte de la première zone mémoire, la deuxième zone mémoire étant incluse dans l'ensemble de mémoire(s) ;

et en ce que la phase d'utilisation comprenant l'étape suivante :

- lecture ultérieure du message de référence dans la deuxième zone mémoire, le message de référence lu dans la deuxième zone mémoire formant l'aléa pour l'algorithme cryptographique.

Avec le procédé de fourniture selon l'invention, du fait du caractère aléatoire intrinsèque de la mémoire de référence dans l'état prédéfini de génération d'aléa, le message de référence lu dans la première zone mémoire présente un caractère aléatoire, et l'écriture de ce message de référence dans la deuxième zone mémoire permet ensuite la lecture ultérieure du message de référence dans la deuxième zone mémoire, sans risque d'altération du message de référence par une nouvelle lecture de la première zone mémoire. Le message de référence lu forme ainsi l'aléa pour l'algorithme cryptographique.

De préférence, lorsque la mémoire de référence est une mémoire non-volatile, par exemple une mémoire résistive, telle qu'une mémoire à changement de phase (PCM), l'état prédéfini de génération d'aléa est un état vierge initial de ladite mémoire. Lorsque la mémoire de référence est une mémoire volatile, telle qu'une mémoire vive statique (SRAM), l'état prédéfini de génération d'aléa est un état à l'allumage de ladite mémoire, c'est-à-dire l'état à la mise sous tension de ladite mémoire.

Suivant d'autres aspects avantageux de l'invention, le procédé de fourniture comprend une ou plusieurs des caractéristiques suivantes, prises isolément ou suivant toutes les combinaisons techniquement possibles :

- la mémoire de référence est choisie parmi une mémoire volatile et une mémoire non-volatile ;

  la mémoire volatile étant de préférence une mémoire vive statique ;
  la mémoire non-volatile étant de préférence une mémoire résistive, de préférence encore choisie parmi le groupe consistant en : une mémoire à changement de phase, une mémoire vive résistive à oxyde d'hafnium, et une mémoire vive à pontage conducteur. ;

- lorsque la mémoire de référence est la mémoire non-volatile, l'état prédéfini de génération d'aléa est un état vierge initial de ladite mémoire ; et
  lorsque la mémoire de référence est la mémoire volatile, l'état prédéfini de génération d'aléa est un état à l'allumage de ladite mémoire ;
- lorsque la mémoire de référence est la mémoire non-volatile, le procédé comprend en outre une étape de contrôle de l'état de la mémoire de référence, pour contrôler si la première zone mémoire est toujours à l'état de génération d'aléa ;
  l'étape de contrôle comportant de préférence un contrôle d'une absence d'écriture dans la première zone mémoire via une lecture d'un registre de configuration associé ; ou/et un contrôle d'accès mémoire interdisant un accès en écriture de la première zone mémoire ;
- le procédé comprend en outre une étape de vérification de l'aléa comportant une lecture d'une portion du message de référence dans la première zone mémoire, une lecture de la portion du message de référence dans la deuxième zone mémoire, puis une comparaison des deux portions de message de référence lues, l'aléa étant considéré correct si une différence entre les deux portions lues est inférieure à un seuil prédéfini ;

  le message de référence étant de préférence un message binaire, et la différence étant le nombre de bits distincts entre les deux portions lues lors d'une comparaison bit à bit desdites portions ;
  la différence étant de préférence encore le poids de Hamming d'une portion de comparaison, la portion de comparaison étant obtenue via une opération de OU EXCLUSIF entre les deux portions lues ;
  chaque portion étant de préférence encore un même lot de bits du message de référence, lu dans la zone mémoire correspondante ;

- la première zone mémoire comporte des lignes de mot, des lignes de bit, des lignes de source et des cellules mémoire organisées selon une matrice comportant des rangées et des colonnes, les cellules mémoire d'une même rangée étant sélectionnables par une ligne de mot, les cellules mémoire d'une même colonne étant reliées à au moins une ligne de bit et au moins une ligne de source, chaque cellule mémoire comportant au moins un composant mémoire apte à mémoriser une valeur et au moins un commutateur, chaque commutateur étant commandé via une ligne de mot respective ;et la première zone mémoire comporte des diodes de blocage de l'écriture dans les cellules mémoire, chaque ligne de bit étant connectée à une masse électrique via une diode de blocage respective, la diode de blocage étant alors connectée par son anode à la ligne de bit correspondante et par sa cathode à la masse électrique, chaque diode de blocage étant passante au dépassement d'un seuil de tension dont la valeur est supérieure à une tension de lecture des cellules mémoire et inférieure à une tension d'écriture des cellules mémoire ;

chaque ligne de source étant de préférence connectée à la masse électrique via une diode de blocage respective, la diode de blocage étant alors connectée par son anode à la ligne de source correspondante et par sa cathode à la masse électrique,
le message de référence étant de préférence encore un message binaire, et chaque cellule mémoire étant apte à mémoriser un bit respectif du message binaire ; et

- le message de référence est un message binaire comportant N bits, N étant un nombre entier ;

N étant de préférence compris entre 256 et 8192.

L'invention concerne également un procédé de traitement d'une donnée via un algorithme cryptographique utilisant un aléa, le procédé étant mis en oeuvre par un calculateur électronique, et l'aléa étant fourni par un procédé de fourniture tel que défini ci-dessus.

Suivant un autre aspect avantageux de l'invention, le procédé de traitement comprend la caractéristique suivante :

- l'algorithme cryptographique est choisi parmi le groupe consistant en : un algorithme de chiffrement ; et un algorithme d'authentification, tel qu'un algorithme de hachage ou un algorithme de signature.

L'invention concerne également un programme d'ordinateur comportant des instructions logicielles qui, lorsqu'elles sont exécutées par un calculateur, mettent en oeuvre un procédé de fourniture ou un procédé de traitement, tels que définis ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

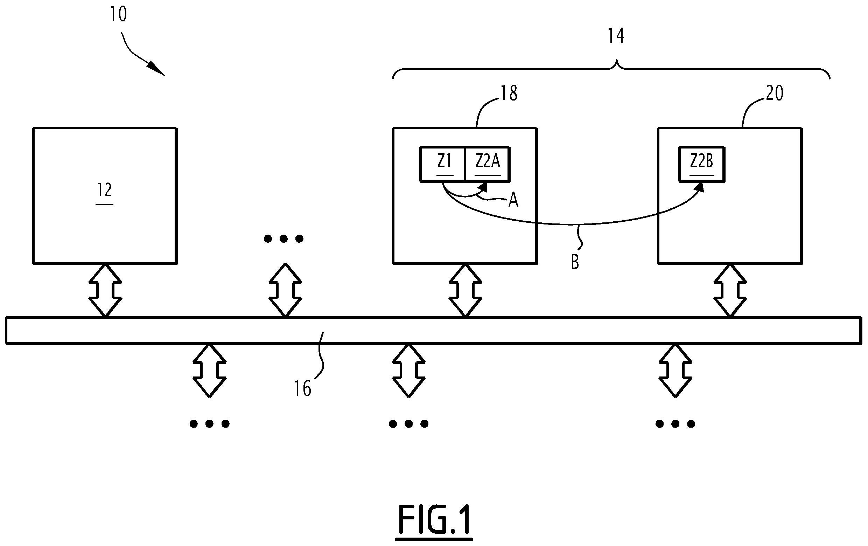

- la figure 1 est une représentation schématique d'un calculateur électronique mettant en oeuvre le procédé selon l'invention de fourniture d'un aléa pour un algorithme cryptographique, le calculateur électronique comprenant un coeur et un ensemble de mémoire(s), l'ensemble de mémoire(s) comportant une mémoire de référence ;

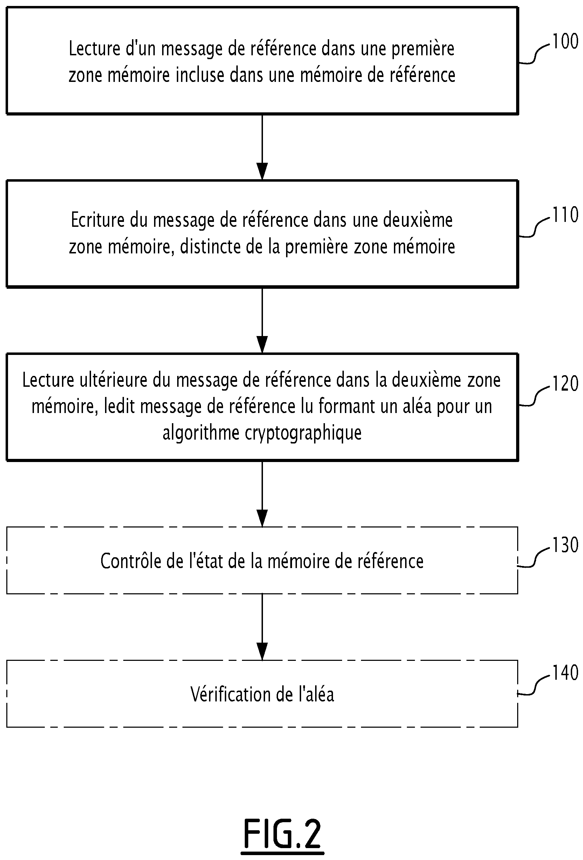

- la figure 2 est un organigramme du procédé selon l'invention de fourniture de l'aléa pour l'algorithme cryptographique, le procédé comportant notamment la lecture d'un message de référence dans une première zone mémoire incluse dans la mémoire de référence, l'écriture du message de référence dans une deuxième zone mémoire distincte de la première zone mémoire, et la lecture ultérieure du message de référence dans la deuxième zone mémoire, le message de référence lu formant l'aléa pour l'algorithme cryptographique ;

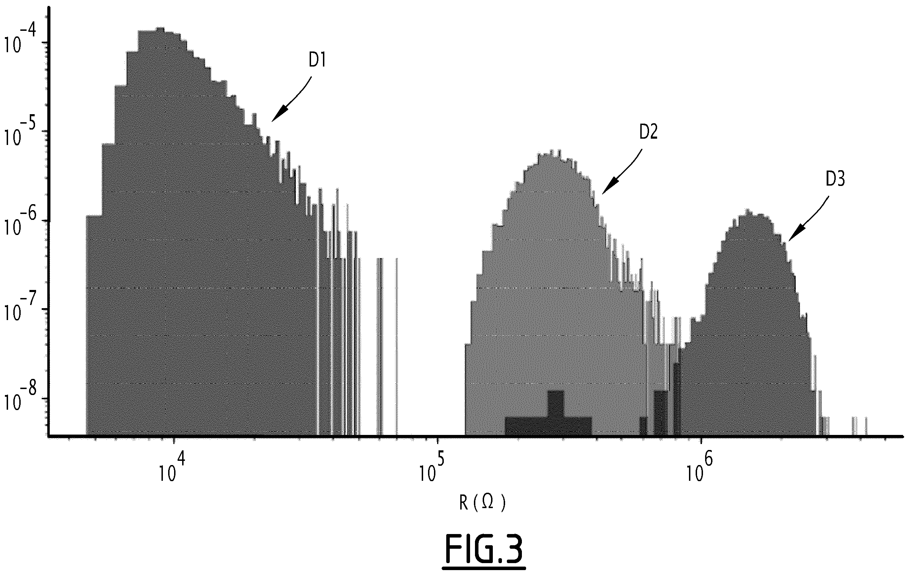

- la figure 3 est une vue montrant trois distributions de résistance pour des mémoires PCM correspondant à chacun des trois états possibles de ces mémoires, à savoir un état vierge (correspondant à l'état *Pre-forming* en anglais), un état écrit (correspondant à l'état *SET* en anglais), et un état effacé (correspondant à l'état *RESET* en anglais) ;

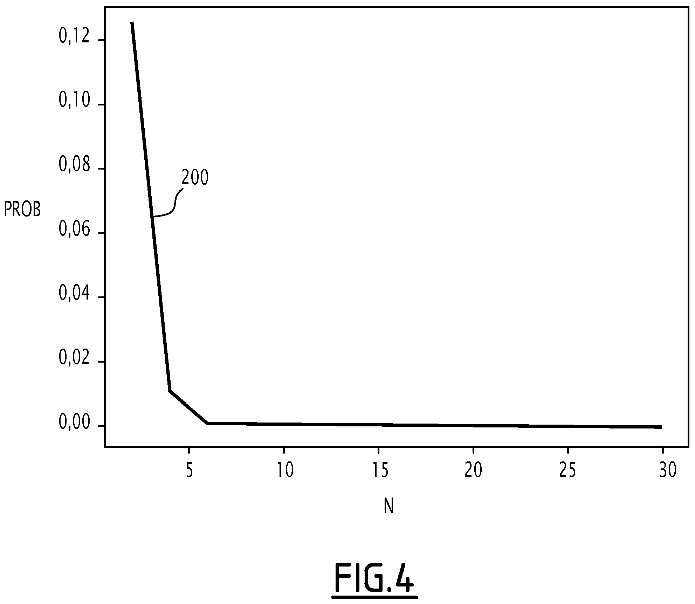

- la figure 4 représente une courbe illustrant une probabilité d'un faux positif en fonction d'un nombre de bits du message de référence, le faux positif correspondant au cas où le message de référence lu formant l'aléa est invalide, mais vérifié comme valide lors d'une étape optionnelle de vérification de l'aléa ; et

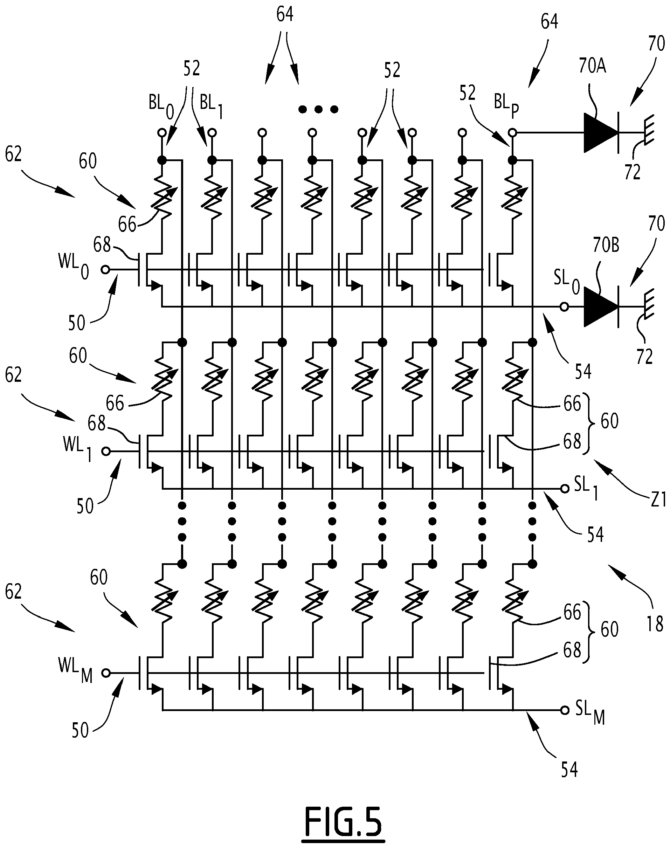

- la figure 5 représente la mémoire de référence de la figure 1, selon un aspect complémentaire où la première zone mémoire comporte des lignes de mot, des lignes de bit, des lignes de source, des cellules mémoire aptes à fournir chacune un bit du message de référence, et en outre des diodes de blocage de l'écriture dans les cellules mémoire.

Dans la suite de la description, les expressions « sensiblement égal(e) à » et « de l'ordre de » définissent une relation d'égalité à plus ou moins 20%, de préférence encore à plus ou moins 10%, de préférence encore à plus ou moins 5%.

Sur la figure 1, un calculateur électronique 10 comprend un coeur 12 et un ensemble 14 de mémoire(s), et un bus de communication 16 interconnectant le coeur 12 et ledit ensemble 14. Le calculateur électronique 10 est configuré pour mettre en oeuvre le procédé selon l'invention de fourniture d'un aléa pour un algorithme cryptographique, décrit par la suite, notamment en regard de la figure 2.

Le calculateur électronique 10 comporte par exemple un processeur multicoeur, et comprend alors plusieurs coeurs 12.

Le calculateur électronique 10 est par exemple un système sur puce, également appelé SOC (de l'anglais *System On Chip*).

Le coeur 12 est un coeur d'unité de traitement d'informations, connu en soi, et est typiquement un coeur de microcontrôleur, ou encore un coeur de processeur, tel qu'un coeur de microprocesseur. Comme indiqué précédemment, le processeur est par exemple un processeur multicoeur, et le coeur 12 est alors l'un des coeurs dudit processeur.

L'ensemble 14 de mémoire(s) comporte au moins une mémoire, c'est à dire comporte une ou plusieurs mémoires. L'ensemble 14 comporte notamment une mémoire de référence 18 présentant un caractère aléatoire intrinsèque dans un état prédéfini de génération d'aléa.

En complément facultatif, l'ensemble 14 comporte une mémoire additionnelle 20.

La mémoire de référence 18 est une mémoire non-volatile, par exemple une mémoire résistive, telle qu'une mémoire à changement de phase (PCM) ; ou encore une mémoire volatile, telle qu'une mémoire vive statique (SRAM).

Lorsque la mémoire de référence 18 est la mémoire non-volatile, par exemple la mémoire résistive, telle que la mémoire à changement de phase (PCM), l'état prédéfini de génération d'aléa est un état vierge initial de ladite mémoire. Les autres états de la mémoire à changement de phase (PCM) sont, comme connu en soi, un état écrit (correspondant à l'état *SET* en anglais), et un état effacé (correspondant à l'état *RESET* en anglais).

La mémoire PCM est un composant microélectronique utilisé pour le stockage non-volatile de données numériques. Elle exploite la transition de phase amorphe-cristalline d'un matériau chalcogénure (très souvent un alliage de germanium Ge, tellure Te et antimoine Sb). Cette transition est obtenue grâce à des impulsions électriques qui produisent l'échauffement localisé du matériau. L'alliage atteint la température de fusion, et est ensuite refroidi. Si le refroidissement est « rapide », le matériau aura une phase amorphe, correspondant à l'état effacé (aussi appelé état OFF ou RESET en anglais). Si au contraire le refroidissement est « lent », l'état final sera cristallin, correspondant à l'état écrit (aussi appelé état ON ou SET en anglais). L'état amorphe est caractérisé par une forte résistance électrique, et est également appelé état de haute résistance, dit HRS (de l'anglais *High Resistance State*). L'état cristallin est caractérisé par une faible résistance électrique, et est également appelé état de faible résistance, dit LRS (de l'anglais *Low Resistance State*). Juste après fabrication, la mémoire PCM est dans un état intermédiaire, l'état vierge initial (aussi appelé *Preforming* en anglais), où sa résistance prend des valeurs aléatoires entre les états ON et OFF, c'est-à-dire entre les états LRS et HRS. Cette résistance aléatoire de la mémoire PCM dans son état vierge initial correspond alors au caractère aléatoire intrinsèque de la mémoire de référence 18.

La mémoire PCM est aussi parfois notée PCRAM (de l'anglais *Phase Change Random Access Memory*), et également appelée mémoire vive à changement de phase. La mémoire PCM est une mémoire vive résistive, également appelée RRAM (de l'anglais *Resistive Random Access Memory*).

L'homme du métier observera que même si une mémoire vive résistive (RRAM) de type autre que la mémoire PCM paraît moins adaptée pour la mise en oeuvre du procédé de fourniture selon l'invention, étant donné que les types de mémoire vive résistive autre que la mémoire PCM présentent une forte résistance initiale à l'état vierge, ce qui implique alors des difficultés de lecture de ces autres types de mémoire vive résistive dans leur état vierge, l'invention s'applique également à ces autres types de mémoire résistive. Ces autres types de mémoire vive résistive sont par exemple mémoire OxRAM (de l'anglais *hafnium-Oxide Random Access Memory*), également appelée mémoire vive résistive à oxyde d'hafnium ; et mémoire CBRAM (de l'anglais *Conductive Bridging Random Access Memory*), également appelée mémoire vive à pontage conducteur.

Les documents « A Strong Physically Unclonable Fonction With >280 CRPs and <1.4% BER Using Passive ReRAM Technology » de M.R. Mahmoodi et al (2020) et « Enhancing reliability of a strong physical unclonable function (PUF) solution based on virgin-state phase change memory (PCM) » de L. Cattaneo et al (2023) décrivent des exemples de telles mémoires résistives utilisées pour réaliser une fonction physique non-clonable (PUF).

Lorsque la mémoire de référence 18 est la mémoire volatile, telle que la mémoire vive statique (SRAM), l'état prédéfini de génération d'aléa est un état à l'allumage de ladite mémoire, c'est-à-dire l'état à la mise sous tension de ladite mémoire.

Sur la figure 2, le procédé de fourniture de l'aléa pour l'algorithme cryptographique comprend tout d'abord une étape 100 de lecture d'un message de référence dans une première zone mémoire Z1, la première zone mémoire Z1 étant incluse dans la mémoire de référence 18.

Le procédé de fourniture de l'aléa pour l'algorithme cryptographique est typiquement mis en oeuvre par un programme d'ordinateur. Le programme d'ordinateur comporte des instructions logicielles qui, lorsqu'elles sont exécutées par un calculateur, mettent en oeuvre un tel procédé de fourniture. Les instructions sont par exemple des instructions logicielles, ou encore des instructions machine, lorsque le coeur 12 exécutant le programme d'ordinateur est un coeur de processeur. En variante, les instructions sont des instructions microcontrôleur lorsque le coeur 12 exécutant le programme d'ordinateur est un coeur de microcontrôleur.

L'étape de lecture 100 est effectuée à l'état de génération d'aléa de la mémoire de référence 18.

Lorsque la mémoire de référence 18 est la mémoire non-volatile, par exemple la mémoire résistive, telle que la mémoire à changement de phase (PCM), l'étape de lecture 100 est alors effectuée à l'état vierge initial de la mémoire de référence 18. Autrement dit, lors de cette étape de lecture 100, le coeur 12 lit le message de référence dans la première zone mémoire Z1 de la mémoire de référence 18 qui est alors dans son état vierge initial.

Lorsque la mémoire de référence 18 est la mémoire volatile, telle que la mémoire vive statique (SRAM), l'étape de lecture 100 est alors effectuée dans l'état à l'allumage de la mémoire de référence 18, c'est-à-dire à l'état de mise sous tension de la mémoire de référence 18. Autrement dit, lors de cette étape de lecture 100, le coeur 12 lit le message de référence dans la première zone mémoire Z1 de la mémoire de référence 18 qui est alors dans son état d'allumage, c'est-à-dire dans son état de mise sous tension.

L'homme du métier observera que dans le cas de la mémoire volatile, cette étape de lecture 100 est également appelée étape d'obtention, et comporte notamment une recherche de bits les plus fortement biaisés dans la première zone mémoire Z1, c'est-à-dire des bits de la première zone mémoire Z1 ayant la plus forte probabilité de prendre toujours la même valeur à l'état d'allumage. Cette étape d'obtention 100 comporte ensuite une identification desdits bits les plus fortement biaisés, puis une mémorisation des identifiants de ces bits les plus fortement biaisés. Cette étape d'obtention 100 est donc complexe dans le cas de la mémoire volatile, en comportant plusieurs opérations, i.e. sous-étapes, successives.

Le procédé de fourniture comprend ensuite une étape 110 d'écriture du message de référence dans une deuxième zone mémoire Z2, distincte de la première zone mémoire Z1.

Selon un premier exemple, la deuxième zone mémoire Z2 est également incluse dans la mémoire de référence 18, et est alors notée Z2A. L'écriture 110, effectuée par le coeur 12, depuis la première zone mémoire Z1 vers la deuxième zone mémoire Z2A est alors repérée par la flèche A à la figure 1.

Selon un deuxième exemple, la deuxième zone mémoire Z2 est incluse dans la mémoire additionnelle 20, distincte de la mémoire de référence 18, et la deuxième zone mémoire est alors notée Z2B. L'écriture 110, effectuée par le coeur 12, depuis la première zone mémoire Z1 de la mémoire de référence 18 vers la deuxième zone mémoire Z2B de la mémoire additionnelle 20 est alors repérée par la flèche B à la figure 1.

Selon ce deuxième exemple, la mémoire additionnelle 20 est avantageusement d'un type distinct de celui de la mémoire de référence 18.

À titre d'exemple, si la mémoire de référence 18 est la mémoire volatile, telle que la mémoire vive statique (SRAM), la mémoire additionnelle 20 est avantageusement une mémoire non-volatile, telle qu'une mémoire flash, i.e. une mémoire de masse à semiconducteurs réinscriptible.

Les étapes de lecture 100 et d'écriture 110 correspondent à une phase d'initialisation du procédé de fourniture, également appelée phase d'enrôlement. Cette phase d'initialisation permet alors d'initialiser la fonction physique non-clonable (PUF), et le message de référence forme l'aléa, qui est un aléa intrinsèque et statique réalisant la fonction physique non-clonable (PUF). Cette phase d'initialisation est potentiellement exécutée plusieurs fois au cours d'un cycle de vie du calculateur 10, et est par exemple effectuée à nouveau si l'utilisateur réinitialise le calculateur 10 dans lequel la fonction physique non-clonable (PUF) est incluse.

L'homme du métier observera que l'étape d'écriture 110 du message de référence permet alors de stabiliser dans le temps la valeur du message de référence, et la fiabilité de la fonction physique non-clonable (PUF) correspond alors à la fiabilité de la première mémoire de référence 18 ou bien à celle de la mémoire additionnelle 20, suivant - selon le premier ou bien le deuxième exemple - que la deuxième zone mémoire Z2A, Z2B est incluse dans la mémoire de référence 18, ou bien dans la mémoire additionnelle 20.

Le procédé de fourniture selon l'invention comprend ensuite une phase d'utilisation, lors de laquelle au cours du cycle de vie du calculateur 10, l'utilisateur interroge la fonction physique non-clonable (PUF), par exemple pour obtenir une clé cryptographique, ou encore effectuer un mécanisme de challenge-réponse, ceci en fonction du type de l'algorithme cryptographique pour lequel l'aléa est fourni.

Dans cette phase d'utilisation, le procédé de fourniture comprend alors une étape 120 de lecture ultérieure du message de référence dans la deuxième zone mémoire Z2A ; Z2B, le message de référence lu dans la deuxième zone mémoire Z2A ; Z2B formant l'aléa pour l'algorithme cryptographique.

Lors de cette étape de lecture ultérieure 120, le coeur 12 lit simplement le message de référence contenu dans la deuxième zone mémoire, qui est, selon le premier ou bien le deuxième exemple, incluse dans la mémoire de référence 18 et notée Z2A, ou bien incluse dans la mémoire additionnelle 20 et notée Z2B.

Le message de référence lu dans la deuxième zone mémoire Z2A, Z2B forme l'aléa nécessaire pour l'algorithme cryptographique, cet aléa servant par exemple de primitive d'authentification ou de génération de clé.

L'homme du métier comprendre alors que le procédé de fourniture selon l'invention permet de fournir, c'est-à-dire de produire, ou encore de générer, ledit aléa ; et l'aléa produit, ou encore généré, est alors obtenu par lecture du message de référence dans la deuxième zone mémoire Z2A, Z2B.

Le message de référence est par exemple un message binaire comportant N bits. Le nombre N, représentant la taille du message de référence, est un nombre entier typiquement compris entre 256 et 8192. Le message de référence est préférentiellement de quelques kilobits, par exemple 1024 à 4096 bits, N étant alors compris entre 1024 et 4096, ce qui équivaut à la taille habituelle d'une clé de chiffrement cryptographique.

La taille de la première zone mémoire Z1 correspond typiquement à la taille du message de référence. La taille de la deuxième zone mémoire Z2A, Z2B est alors supérieure ou égale à celle de la première zone mémoire Z1, afin d'avoir suffisamment d'espace mémoire dans la deuxième zone mémoire Z2A, Z2B pour effectuer l'écriture du message de référence lors de l'étape d'écriture 110. La deuxième zone mémoire Z2A, Z2B est de préférence de taille identique à celle de la première zone mémoire Z1.

En complément facultatif, en particulier lorsque la mémoire de référence 18 est la mémoire non-volatile, par exemple la mémoire résistive, telle que la mémoire à changement de phase (PCM), le procédé de fourniture comprend en outre une étape 130 de contrôle de l'état de la mémoire de référence 18, pour contrôler si la première zone mémoire Z1 est toujours à l'état de génération d'aléa, autrement dit dans l'état vierge.

L'étape de contrôle 130 comporte par exemple un contrôle d'une absence d'écriture dans la première zone mémoire Z1 via une lecture d'un registre de configuration associé ; ou/et un contrôle d'accès mémoire interdisant un accès en écriture de la première zone mémoire Z1. Le contrôle d'absence d'écriture dans la première zone mémoire Z1 revient alors à vérifier que la première zone mémoire Z1 n'a pas subie d'écriture (de l'anglais *forming*) depuis l'étape de lecture 100. Le contrôle d'accès mémoire revient alors à interdire, par contrôle d'accès mémoire, toute écriture (de l'anglais *forming*) dans la première zone mémoire Z1.

L'homme du métier observera que l'aspect complémentaire décrit par la suite en regard de la figure 5 vise également à interdire une écriture dans la première zone mémoire Z1.

En complément facultatif encore, en particulier si l'utilisateur souhaite vérifier que la fonction physique non-clonable (PUF) n'a pas été clonée, le procédé de fourniture comprend en outre une étape 140 de vérification de l'aléa.

L'étape de vérification 140 comporte une lecture d'une portion du message de référence dans la première zone mémoire Z1 et une lecture de la portion du message de référence dans la deuxième zone mémoire Z2A, Z2B ; suivies d'une comparaison des deux portions de message de référence lues ; l'aléa étant considéré correct si une différence entre les deux portions lues est inférieure à un seuil prédéfini.

Le message de référence est typiquement un message binaire, et la différence est alors le nombre de bits distincts entre les deux portions lues lors d'une comparaison bit à bit desdites portions.

Dans cet exemple où le message de référence est un message binaire, la différence est avantageusement le poids de Hamming d'une portion de comparaison, la portion de comparaison étant obtenue via une opération de OU EXCLUSIF entre les deux portions lues. Chaque portion est typiquement un même lot de bits du message de référence, lu dans la zone mémoire correspondante Z1, Z2A, Z2B.

L'homme du métier observera que le calcul de ce poids de Hamming revient à comptabiliser le nombre de bits distincts entre les deux portions lues lors d'une comparaison bit à bit desdites portions.

L'homme du métier notera qu'un taux d'erreur de lecture de la première zone mémoire Z1, en particulier lorsqu'il s'agit d'une zone vierge d'une mémoire PCM formant la mémoire de référence 18, est susceptible d'augmenter avec le vieillissement de la mémoire de référence 18 ou bien dans des conditions de pression et de température défavorables, et que le seuil prédéfini, en-dessous duquel l'aléa est considéré correct lors de l'étape de vérification 140, est alors préférentiellement choisi en tenant compte de ce vieillissement et/ou de ces conditions de pression et de température défavorables.

Les deux évènements redoutés d'une fonction physique non-clonable (PUF) sont la non-détection (la PUF est valide, mais est vérifiée comme invalide), aussi appelée faux négatif, et le faux positif (la PUF est invalide, mais vérifiée comme valide).

Pour s'affranchir du risque de non-détection ou de faux négatif, par exemple le pire cas est choisi en acceptant un fort taux d'erreur de 50% ; c'est-à-dire en considérant qu'un bit sur deux diffère entre les deux portions lues lors de la comparaison bit à bit desdites portions.

L'évènement redouté d'un faux positif est le risque qu'il existe un message, noté Mx, très altéré dans lequel la moitié des bits sont exacts par hasard, et que ce message Mx validerait la condition 1, alors qu'elle ne devrait pas l'être. La probabilité d'un faux positif est néanmoins extrêmement faible. En effet, en considérant que le message Mx a une taille de N bits, et alors N/2 bits sont faux, la probabilité PROB que ces N/2 bits faux soient égaux à N/2 bits du message de référence s'exprime selon le nombre de combinaisons de N/2 éléments parmi un ensemble de N éléments, divisé par le nombre de messages de référence possibles. Cette probabilité PROB vérifie alors l'équation suivante :

[1]

$$PROB = \frac{(N - {}^{N}\!/_{2})! \times ({}^{N}\!/_{2})!}{N! \times 2N} = \frac{({}^{N}\!/_{2})! \times ({}^{N}\!/_{2})!}{N! \times 2N}$$

Cette probabilité PROB est représentée par la courbe 200 à la figure 4, qui montre que cette probabilité d'un faux positif décroit très rapidement lorsque la taille N du message de référence augmente. Par exemple, pour un message de référence de 64 bits de long, c'est-à-dire si N est égal à 64, alors la probabilité PROB d'un faux positif est déjà extrêmement faible, en l'occurrence sensiblement égale à $2,95 \times 10^{-38}$.

Sur la figure 3, trois distributions de résistance pour des mémoires à changement de phase (PCM) sont représentées correspondant à chacun des trois états possibles de ces mémoires, à savoir une première distribution D1 pour l'état écrit (correspondant à l'état *SET* en anglais), une deuxième distribution D2 pour l'état vierge (correspondant à l'état *Pre-forming* en anglais), et une troisième distribution D3 pour l'état effacé (correspondant à l'état *RESET* en anglais).

L'homme du métier observera alors que la figure 3 montre que lorsque l'aléa est obtenu par lecture du message de référence dans la première zone mémoire Z1 de la mémoire de référence 18, réalisée sous forme de mémoire à changement de phase (PCM), qui est alors dans son état vierge initial, cet aléa est de très bonne qualité, la distribution associée à l'état vierge, à savoir la deuxième distribution D2, étant une distribution normale, et avec en outre une distance de Hamming inter-PUF sensiblement égale à 0,4994 (soit suffisamment proche de 0,5).

Cependant, les inventeurs ont également remarqué que relire l'état vierge d'une mémoire à changement de phase (PCM) est peu fiable. Le fait de mettre un seuil de résistance pour discriminer deux états binaires sur la médiane de la deuxième distribution D2 (correspondant à la distribution pour l'état vierge) impliquerait une quantification non-déterministe. En effet, des mesures montrent alors un taux d'erreur bit de 5 à 10% entre chaque relecture du même état vierge. Aussi, la réalisation d'une fonction physique non-clonable (PUF) par simple lecture de l'état vierge d'une mémoire à changement de phase (PCM) ne serait pas suffisamment fiable, sans rajouter de la redondance et/ou des algorithmes de correction d'erreurs.

Le procédé de fourniture selon invention permet alors de remédier à ce manque de fiabilité, en l'absence de redondance de mémoire à changement de phase (PCM) et/ou d'algorithme(s) de correction d'erreur.

L'invention concerne également un procédé de traitement d'une donnée via l'algorithme cryptographique utilisant l'aléa, le procédé étant mis en oeuvre par un calculateur électronique, l'aléa étant fourni par le procédé de fourniture selon l'invention.

Le calculateur électronique mettant en oeuvre le procédé de traitement est par exemple le calculateur électronique 10 mettant en oeuvre le procédé de fourniture. En variante, le calculateur électronique mettant en oeuvre le procédé de traitement est un calculateur électronique distinct dudit calculateur électronique 10.

L'algorithme cryptographique est par exemple un algorithme de chiffrement, ou bien un algorithme d'authentification, tel qu'un algorithme de hachage ou un algorithme de signature. Ces différents types d'algorithme cryptographique sont connus en soi.

Selon un aspect complémentaire, sur la figure 5, la mémoire de référence 18, et en particulier la première zone mémoire Z1, comporte des lignes de mot 50, également référencées WL (de l'anglais *Word Line*) ; des lignes de bit 52, également référencées BL (de l'anglais *Bit Line*) ; des lignes de source 54, également référencées SL (de l'anglais *Source Line*) ; et des cellules mémoire 60 organisés selon une matrice comportant des rangées 62 et des colonnes 64.

Dans l'exemple de la figure 5, un indice entier i associé aux rangées 62 est par exemple compris entre 0 et M, et un indice entier j associé aux colonnes 64 est par exemple compris entre 0 et P, de sorte que le nombre de rangées 62 est égal à M+1, et le nombre de colonnes 64 est égal à P+1.

Les cellules mémoire 60 d'une même rangée 62 sont sélectionnables par une ligne de mot 50, et associées à une même ligne de source 54. Les lignes de mot 50, et respectivement les lignes de source 54, sont alors également référencées $WL_0$ à $WL_M$, et respectivement $SL_0$ à $SL_M$. Les cellules mémoire 60 d'une même colonne 64 sont associées à une même ligne de bit 52. Les lignes de bit 52 sont alors également référencées $BL_0$ à $BL_P$. Les cellules mémoire 60 d'une même colonne 64 sont reliées à au moins une ligne de bit 52 et au moins une ligne de source 54.

Chaque cellule mémoire 60 comporte au moins un composant mémoire 66 apte à mémoriser une valeur et au moins un commutateur 68, chaque commutateur 68 étant connecté à un composant mémoire 66 respectif et commandé via une ligne de mot 50 respective.

Selon un aspect complémentaire, la première zone mémoire Z1 comporte en outre des diodes 70A, 70B de blocage de l'écriture dans les cellules mémoire 60.

Chaque ligne de bit 52 est connectée à une masse électrique 72 via une première diode de blocage 70A respective. La première diode de blocage 70A est alors connectée par son anode à la ligne de bit 52 correspondante et par sa cathode à la masse électrique 72.

En complément facultatif, chaque ligne de source 54 est connectée à la masse électrique 72 via une deuxième diode de blocage 70B respective, la deuxième diode de blocage 70B étant alors connectée par son anode à la ligne de source 54 correspondante et par sa cathode à la masse électrique 72.

Chaque diode de blocage 70A, 70B est passante au dépassement d'un seuil de tension dont la valeur est choisie pour être supérieure à une tension de lecture des cellules mémoire 60 et inférieure à une tension d'écriture des cellules mémoire 60. Les diodes de blocage 70A, 70B autorisent, c'est-à-dire permettent, alors seulement la lecture des cellules mémoire 60 associées, mais pas l'écriture de celles-ci.

Lorsque le message de référence est un message binaire, chaque cellule mémoire 60 est apte à mémoriser un bit respectif du message binaire.

Chaque composant mémoire 66 est typiquement un memristor, c'est-à-dire un composant dont la valeur de sa résistance électrique change, de façon permanente, lorsqu'un courant est appliqué. Ainsi, une donnée peut être enregistrée par un courant de contrôle. Un tel comportement est notamment observé dans les matériaux à changement de phase. Le changement de résistance d'un memristor dépend de l'amplitude et de la durée des impulsions de tension appliquées à travers le memristor, ainsi que de la valeur maximale de courant pouvant passer dans le memristor par exemple pour une opération de « SET », c'est-à-dire le passage d'une résistance forte à une résistance faible.

Chaque memristor présente ainsi deux états, à savoir un état haut et un état bas. L'état haut correspond à une forte résistance et est généralement désigné par l'abréviation HRS précitée. L'état bas correspond à une faible résistance et est généralement désigné par l'abréviation LRS précitée.

Un poids fort, c'est-à-dire un « 1 » logique, est généralement représenté par l'état bas LRS du memristor ; et de manière corollaire, un poids faible, c'est-à-dire un « 0 » logique, est généralement représenté par l'état haut HRS du memristor.

En variante, le poids fort est représenté par l'état haut HRS du memristor ; et de manière corollaire, le poids faible est représenté par l'état bas LRS du memristor.

L'homme du métier observera que la correspondance entre la valeur du poids et l'état résistif du composant mémoire 66 est purement conventionnelle. Selon la convention choisie par le concepteur, le poids fort peut alors aussi bien correspondre à l'état bas LRS, qu'à l'état haut HRS, et inversement pour le poids faible, ainsi que cela ressort des deux paragraphes précédents.

Chaque commutateur 68 est typiquement un transistor, tel qu'un transistor à effet de champ, également appelé FET (de l'anglais *Field-Effect Transistor*). Ainsi, chaque commutateur 68 présente, comme connu en soi, trois électrodes, à savoir une grille, une source et un drain. Chaque commutateur 68 est par exemple un transistor à effet de champ à grille isolée, également appelé MOSFET (de l'anglais *Métal Oxide Semiconductor Field Effect Transistor*).

Chaque grille de commutateur 68 est connectée à une ligne de mot WL respective. Selon le niveau de tension présent sur la ligne de mot WL, le commutateur 68 est rendu passant ou au contraire non-passant, i.e. bloqué.

Comme connu en soi, les lignes de mot 50, les lignes de bit 52, et les lignes de source 54 sont contrôlées par un ou plusieurs contrôleurs, non représentés. Un premier contrôleur est typiquement associé aux rangées 62, et est alors propre à contrôler les lignes de mot 50 et les lignes de source 54 ; c'est-à-dire à appliquer, à ces lignes 50, 54, les tensions adéquates en fonction de l'opération à effectuer sur les cellules mémoire 60 de la rangée 62 correspondante. De manière analogue, un deuxième contrôleur est associé aux colonnes 64, et est alors propre à contrôler les lignes de bit 52 ; c'est-à-dire à appliquer, à ces lignes de bit 52, les tensions adéquates en fonction de l'opération à effectuer sur les cellules mémoire 60 de la colonne 64 correspondante.

L'homme du métier comprendra alors que cet aspect complémentaire permet d'améliorer encore la fiabilité de l'aléa fourni, i.e. de la fonction physique non-clonable (PUF), contre des attaques extérieures qui viseraient à modifier le contenu de la fonction physique non-clonable. En effet, les diodes de blocage 70A, 70B autorisent seulement la lecture des cellules mémoire 60, et interdisent toute écriture dans lesdites cellules mémoire 60.

On conçoit ainsi que le procédé de fourniture selon l'invention permet de fournir plus efficacement l'aléa pour l'algorithme cryptographique, ceci sans nécessité d'algorithme(s) de correction d'erreur ou de redondance de mémoire présentant l'état de génération d'aléa.

**Revendications**

1. Procédé de fourniture d'un aléa pour un algorithme cryptographique, le procédé étant mis en oeuvre par un calculateur électronique (10) comprenant un coeur (12) et un ensemble (14) de mémoire(s), l'ensemble de mémoire(s) (14) comportant une mémoire de référence (18) présentant un caractère aléatoire intrinsèque dans un état prédéfini de génération d'aléa, le procédé comprenant une phase d'initialisation d'une fonction physique non-clonable et une phase d'utilisation de la fonction physique non-clonable ;

   la phase d'initialisation comprenant l'étape suivante :

   - lecture (100) d'un message de référence dans une première zone mémoire (Z1), la première zone mémoire (Z1) étant incluse dans la mémoire de référence (18), l'étape de lecture (100) étant effectuée à l'état de génération d'aléa de la mémoire de référence (18), le message de référence formant l'aléa réalisant la fonction physique non-clonable ;

   **caractérisé en ce que** la phase d'initialisation comprend en outre l'étape suivante :

- écriture (110) du message de référence dans une deuxième zone mémoire (Z2A ; Z2B), distincte de la première zone mémoire (Z1), la deuxième zone mémoire (Z2A ; Z2B) étant incluse dans l'ensemble (14) de mémoire(s) ;

et **en ce que** la phase d'utilisation comprend l'étape suivante :

- lecture ultérieure (120) du message de référence dans la deuxième zone mémoire (Z2A ; Z2B), le message de référence lu dans la deuxième zone mémoire (Z2A ; Z2B) formant l'aléa pour l'algorithme cryptographique.

2. Procédé selon la revendication 1, dans lequel la mémoire de référence (18) est choisie parmi une mémoire volatile et une mémoire non-volatile ;

la mémoire volatile étant de préférence une mémoire vive statique ;
la mémoire non-volatile étant de préférence une mémoire résistive, de préférence encore choisie parmi le groupe consistant en : une mémoire à changement de phase, une mémoire vive résistive à oxyde d'hafnium, et une mémoire vive à pontage conducteur.

3. Procédé selon la revendication 2, dans lequel lorsque la mémoire de référence (18) est la mémoire non-volatile, l'état prédéfini de génération d'aléa est un état vierge initial de ladite mémoire (18) ; et lorsque la mémoire de référence (18) est la mémoire volatile, l'état prédéfini de génération d'aléa est un état à l'allumage de ladite mémoire (18).

4. Procédé selon la revendication 2 ou 3, dans lequel lorsque la mémoire de référence (18) est la mémoire non-volatile, le procédé comprend en outre une étape (130) de contrôle de l'état de la mémoire de référence (18), pour contrôler si la première zone mémoire (Z1) est toujours à l'état de génération d'aléa ; l'étape de contrôle (130) comportant de préférence un contrôle d'une absence d'écriture dans la première zone mémoire (Z1) via une lecture d'un registre de configuration associé ; ou/et un contrôle d'accès mémoire interdisant un accès en écriture de la première zone mémoire (Z1).

5. Procédé selon l'une quelconque des revendications précédentes, dans lequel le procédé comprend en outre une étape (140) de vérification de l'aléa comportant une lecture d'une portion du message de référence dans la première zone mémoire (Z1), une lecture de la portion du message de référence dans la deuxième zone mémoire (Z2A ; Z2B), puis une comparaison des deux portions de message de référence lues, l'aléa étant considéré correct si une différence entre les deux portions lues est inférieure à un seuil prédéfini ;

le message de référence étant de préférence un message binaire, et la différence étant le nombre de bits distincts entre les deux portions lues lors d'une comparaison bit à bit desdites portions ;
la différence étant de préférence encore le poids de Hamming d'une portion de comparaison, la portion de comparaison étant obtenue via une opération de OU EXCLUSIF entre les deux portions lues ;
chaque portion étant de préférence encore un même lot de bits du message de référence, lu dans la zone mémoire correspondante (Z1, Z2A ; Z1, Z2B).

6. Procédé selon l'une quelconque des revendications précédentes, dans lequel la première zone mémoire (Z1) comporte des lignes de mot (50), des lignes de bit (52), des lignes de source (54) et des cellules mémoire (60) organisées selon une matrice comportant des rangées (62) et des colonnes (64), les cellules mémoire (60) d'une même rangée (62) étant sélectionnables par une ligne de mot (50), les cellules mémoire (60) d'une même colonne (64) étant reliées à au moins une ligne de bit (52) et au moins une ligne de source (54), chaque cellule mémoire (60) comportant au moins un composant mémoire (66) apte à mémoriser une valeur et au moins un commutateur (68), chaque commutateur (68) étant commandé via une ligne de mot (50) respective ; et la première zone mémoire (Z1) comporte des diodes (70A, 70B) de blocage de l'écriture dans les cellules mémoire (60), chaque ligne de bit (52) étant connectée à une masse électrique (72) via une diode de blocage (70A) respective, la diode de blocage (70A) étant alors connectée par son anode à la ligne de bit (52) correspondante et par sa cathode à la masse électrique (72), chaque diode de blocage (70A, 70B) étant passante au dépassement d'un seuil de tension dont la valeur est supérieure à une tension de lecture des cellules mémoire (60) et inférieure à une tension d'écriture des cellules mémoire (60) ;

chaque ligne de source (54) étant de préférence connectée à la masse électrique (72) via une diode de blocage (70B) respective, la diode de blocage (70B) étant alors connectée par son anode à la ligne de source (54) correspondante et par sa cathode à la masse électrique (72),

le message de référence étant de préférence encore un message binaire, et chaque cellule mémoire (60) étant apte à mémoriser un bit respectif du message binaire.

**7.** Procédé selon l'une quelconque des revendications précédentes, dans lequel le message de référence est un message binaire comportant N bits, N étant un nombre entier ;

N étant de préférence compris entre 256 et 8192.

**8.** Procédé de traitement d'une donnée via un algorithme cryptographique utilisant un aléa, le procédé étant mis en oeuvre par un calculateur électronique (10), dans lequel l'aléa est fourni par un procédé selon l'une quelconque des revendications précédentes.

**9.** Procédé selon la revendication 8, dans lequel l'algorithme cryptographique est choisi parmi le groupe consistant en : un algorithme de chiffrement ; et un algorithme d'authentification, tel qu'un algorithme de hachage ou un algorithme de signature.

**10.** Programme d'ordinateur comportant des instructions qui, lorsqu'elles sont exécutées par un calculateur (10), mettent en oeuvre un procédé selon l'une quelconque des revendications précédentes.

EP 4 375 832 A1

FIG.1

Lecture d'un message de référence dans une première zone mémoire incluse dans une mémoire de référence ⌐100

Ecriture du message de référence dans une deuxième zone mémoire, distincte de la première zone mémoire ⌐110

Lecture ultérieure du message de référence dans la deuxième zone mémoire, ledit message de référence lu formant un aléa pour un algorithme cryptographique ⌐120

Contrôle de l'état de la mémoire de référence ⌐130

Vérification de l'aléa ⌐140

## FIG.2

FIG.3

FIG.4

## FIG.5

Europäisches
Patentamt

European
Patent Office

Office européen
des brevets

# RAPPORT DE RECHERCHE EUROPEENNE

Numéro de la demande

EP 23 21 2190

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2017/046129 A1 (CAMBOU BERTRAND [US]) 16 février 2017 (2017-02-16) * abrégé * * figures 2-8, 11-13,2022 * * alinéas [0009] - [0029] * * alinéa [0067] - alinéa [0088] * * alinéa [0091] - alinéa [0098] * ----- | 1-10 | INV. G06F7/58 G09C1/00 H04L9/08 |
| A | SHUBHAM SAHAY ET AL: "Recent trends in hardware security exploiting hybrid CMOS-resistive memory circuits", SEMICONDUCTOR SCIENCE TECHNOLOGY, IOP PUBLISHING LTD, GB, vol. 32, no. 12, 26 octobre 2017 (2017-10-26), page 123001, XP020321756, ISSN: 0268-1242, DOI: 10.1088/1361-6641/AA8F07 [extrait le 2017-10-26] * page 1 - page 15 * ----- | 1-10 | |
| A | GAO YANSONG ET AL: "Emerging Physical Unclonable Functions With Nanotechnology", IEEE ACCESS, IEEE, USA, vol. 4, 28 février 2016 (2016-02-28), pages 61-80, XP011608246, DOI: 10.1109/ACCESS.2015.2503432 * alinéa [0III] * ----- | 1-10 | DOMAINES TECHNIQUES RECHERCHES (IPC) G06F G09C H04L |
| A | US 2014/126306 A1 (OTTERSTEDT JAN [DE] ET AL) 8 mai 2014 (2014-05-08) * abrégé * * figures 1,8-11 * * alinéa [0098] - alinéa [0107] * * alinéa [0116] - alinéa [0129] * ----- -/-- | 1-10 | |

Le présent rapport a été établi pour toutes les revendications

| Lieu de la recherche | Date d'achèvement de la recherche | Examinateur |
|---|---|---|
| Munich | 12 avril 2024 | Bec, Thierry |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 23 21 2190

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | KR 102 150 003 B1 (UNIV EWHA IND COLLABORATION [KR]) 31 août 2020 (2020-08-31) * alinéa [0011] – alinéa [0014] * * alinéa [0034] – alinéa [0074] * ----- | 1-10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 12 avril 2024 | Bec, Thierry |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

**EP 23 21 2190**

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**12-04-2024**

| Document brevet cité au rapport de recherche | Date de publication | Membre(s) de la famille de brevet(s) | Date de publication |
|---|---|---|---|
| US 2017046129 A1 | 16-02-2017 | AUCUN | |
| US 2014126306 A1 | 08-05-2014 | DE 102013222321 A1 | 08-05-2014 |
| | | US    2014126306 A1 | 08-05-2014 |
| KR 102150003 B1 | 31-08-2020 | AUCUN | |

EPO FORM P0460

Pour tout renseignement concernant cette annexe : voir Journal Officiel de l'Office européen des brevets, No.12/82

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10572190 B2
- US 11081172 B1
- US 20140140502 A1

**Littérature non-brevet citée dans la description**

- **QI ZHANG et al.** *Design and security évaluation of PCM-based rPUF using cyclic refreshing strategy,* 2018
- **M.R. MAHMOODI et al.** *A Strong Physically Unclonable Fonction With >280 CRPs and <1.4% BER Using Passive ReRAM Technology,* 2020
- **L. CATTANEO et al.** *Enhancing reliability of a strong physical unclonable function (PUF) solution based on virgin-state phase change memory (PCM),* 2023